# EUROPEAN PATENT SPECIFICATION

(11) **EP 2 757 179 B1**
(45) Date of publication and mention of the grant of the patent: **10.08.2016**
(21) Application number: 12831872.2
(22) Date of filing: 31.08.2012
(51) Int. Cl.: C25C 7/02, C02F 1/46, C25B 11/04, C25B 11/08, C25B 11/10

(54) **CHLORINE-GENERATING POSITIVE ELECTRODE**
CHLORERZEUGENDE POSITIVE ELEKTRODE
ELECTRODE POSITIVE DE GÉNÉRATION DE CHLORE

(30) Priority: 13.09.2011 JP 2011199257
(43) Date of publication of application: 23.07.2014
(73) Proprietor: The Doshisha, Kyoto 602-8580 (JP)
(72) Inventor: MORIMITSU, Masatsugu, Kyotanabe-shi Kyoto 610-0394 (JP)
(74) Representative: Hoffmann Eitle
(86) International application number: PCT/JP2012/072236
(87) International publication number: WO 2013/038927

(56) References cited:
- WO-A1-2009/151044
- WO-A1-2011/070908
- WO-A1-2012/133136
- JP-A- 2000 110 000
- JP-A- 2011 122 183
- JP-B1- 4 916 040
- JOSIMAR RIBEIRO ET AL: "Characterization of RuO[sub 2]-Ta[sub 2]O[sub 5] Coated Titanium Electrode", JOURNAL OF THE ELECTROCHEMICAL SOCIETY, vol. 151, no. 10, 15 September 2004 (2004-09-15), page D106, XP055169696, ISSN: 0013-4651, DOI: 10.1149/1.1787174
- YONG-YI CHEN: 'Phase Structure and Microstructure of a Nanoscale Ti02-Ru02-Ir02- Ta205 Anode Coating on Titanium' JOURNAL OF THE AMERICAN CERAMIC SOCIETY vol. 91, no. ISSUE, December 2008, pages 4154 - 4157, XP055153819

## Description

### Technical Field

The present invention relates to the use of a chlorine evolution anode for chlorine evolution, such as in electrowinning a desired metal at a cathode by electrolysis and also to the use of a chlorine evolution anode for generating chlorine from a chloride based aqueous solution by brine electrolysis, hydrochloric acid electrolysis, sea water electrolysis, etc. More specifically, the present invention relates to the use of a chlorine evolution anode which is used in electrowinning, brine electrolysis, hydrochloric acid electrolysis, sea water electrolysis, etc., in which an aqueous solution is used as an electrolytic solution and a main reaction of the anode is generation of chlorine.

### Background Art

Electrowinning is performed by a current flow between an anode and a cathode placed in an aqueous solution which contains ions of a metal to be extracted (hereinafter, referred to as an electrowinning solution), thereby depositing the metal on the cathode. Electrowinning includes a method for producing a metal by electrolysis, using an electrowinning solution prepared through steps, such as, in which an ore is crushed which contains any one or more of, for example, copper, zinc, nickel, cobalt, lead, platinum group metals (such as platinum, iridium, ruthenium, palladium, etc.), precious metals (silver or gold), other transition metal elements and metal elements collectively called rare metal or critical metal, and metal ions are dissolved using an adequate acid, etc., to extract target metal ions. Further, electrowinning also includes a case in which metals may be reproduced and collected by electrolysis, using an electrowinning solution which contains target metal ions through steps, such as, in which a used metal or alloy is crushed to dissolve metal ions for the purpose of recycling metal or alloy used in various applications, for example, primary batteries, secondary batteries, fuel cells, mobile devices such as cellular phones, other electronic devices, electrical and electronic components, plated steel plates, plated ornaments, etc. Still further, electrowinning also includes a case in which metals are collected by electrolysis, using an electrowinning solution which contains target metal ions through steps, such as, in which metal ions are extracted from a waste of a plating solution. Focusing on compositions other than metal ions of the electrowinning solution used in electrowinning, a main reaction of an anode will change depending on whether chloride ions are contained or not. An electrolytic solution which contains chloride ions may exhibit a case where a main reaction at an anode is chlorine evolution. A carbon electrode such as graphite or glassy carbon, a lead alloy electrode, a platinum-coated titanium electrode, an oxide-coated titanium electrode, etc., are used in electrowinning of metals in which a main reaction at an anode is chlorine evolution. In particular, an oxide-coated titanium electrode in which a titanium substrate is coated with a composite oxide of ruthenium and titanium is frequently used. It is noted that whether chlorine evolution becomes a main reaction at an anode or not is influenced by the chloride ion concentration, the presence or absence of a complex formation between metal ions and chloride ions, stability thereof and pH, etc., of an electrowinning solution.

Further, the above-described oxide-coated titanium electrode is also used as a chlorine evolution anode in brine electrolysis, hydrochloric acid electrolysis, sea water electrolysis, etc. It is noted that brine electrolysis is a method in which an aqueous solution of concentrated sodium chloride is electrolyzed, thereby producing chlorine at an anode and producing hydrogen and a solution of concentrated sodium hydroxide at a cathode. Hydrochloric acid electrolysis is a method in which chlorine which is used for pasteurization in fields of, such as food, medical treatment and raising livestock is produced at an anode by electrolysis of an aqueous solution of hydrochloric acid. A chlorine evolution anode is also used when chlorine is generated at the anode in electrolysis of acid other than hydrochloric acid. Still further, sea water electrolysis is a method in which sea water is electrolyzed to generate chlorine. This method is able to sterilize microorganisms in sea water on production of hypochlorous acid by reactions of thus produced chlorine with water, for example. And, the electrolytic water thereof is used as cooling water for an atomic power plant.

It is well known that the above-described chlorine evolution anode which is used in electrowinning, brine electrolysis, hydrochloric acid electrolysis, sea water electrolysis, etc., includes an oxide-coated titanium electrode as described above and, in particular, an electrode which is produced by thermal decomposition in which a titanium substrate is coated with a catalytic layer containing a composite oxide of ruthenium and titanium. The above-described chlorine evolution anode has been disclosed, for example, in Patent Literature 1 to Patent Literature 7.

Energy consumed in electrowinning, brine electrolysis, hydrochloric acid electrolysis or sea water electrolysis in using the chlorine evolution anode is the product of electrolytic voltage and amount of electricity used for electrolysis. Here, an amount of materials produced at a cathode or an anode (in electrowinning, metal produced at a cathode; in brine electrolysis, hydrogen and sodium hydroxide produced at a cathode and chlorine produced at an anode; and in hydrochloric acid electrolysis and sea water electrolysis, chlorine produced at an anode) is proportional to the amount of electricity. Therefore, electric energy required for producing a target product material per unit weight (hereinafter, referred to as electric energy consumption rate) is decreased accordingly with a decrease in electrolytic voltage. The electrolytic voltage is a difference in potential between an anode and a cathode, and a potential of the cathode is determined by a reaction of the cathode. On the other hand, where the main reaction at an anode is chlorine evolution, a potential of the anode will change depending on a material of the anode. For example, comparison between a material high in catalytic activity and that low in catalytic activity for chlorine evolution shows that the higher the catalytic activity of the material, the lower the potential of the anode. Therefore, in order to decrease an electric energy consumption rate in electrowinning, brine electrolysis, hydrochloric acid electrolysis and sea water electrolysis in which the chlorine evolution anode is used, it is critical and necessary to use a material high in catalytic activity for the anode so as to decrease a potential of the anode.

Further, the chlorine evolution anode is required to have a high catalytic activity for chlorine evolution, and, contrary to the case of chlorine evolution, to have a low catalytic activity for a reaction which may take place on an anode other than chlorine evolution (hereinafter, referred to as a side reaction). For example, in electrowinning of cobalt in which a chloride based aqueous solution is used as an electrowinning solution, use of a titanium electrode, which is coated with a crystalline composite oxide of ruthenium and titanium, as an anode will cause not only chlorine evolution at the anode but also will cause a side reaction in which divalent cobalt ions in the electrowinning solution are oxidized to result in deposition and accumulation of cobalt oxyhydroxide (CoOOH) on the anode. Such deposition of cobalt oxyhydroxide on the anode will take place simultaneously with chlorine evolution which is a main reaction at the anode. However, since cobalt oxyhydroxide has a low catalytic activity for chlorine evolution, it inhibits the chlorine evolution reaction on the anode, increases a potential of the anode as a result, and causes an increase in electrolytic voltage. The above-described deposition and accumulation of a metal oxide on the anode due to the side reaction raise the electrolytic voltage and at the same time cause a reduction in service life and durability of the anode.

Due to the above-described reasons, the chlorine evolution anode which is used in electrowinning, brine electrolysis, hydrochloric acid electrolysis and sea water electrolysis is required to have the following features: 1) a high catalytic activity for chlorine evolution; 2) a low catalytic activity for a side reaction by which a metal oxide is deposited on the anode and also a side reaction which allows the deposits to adhere and accumulate on the anode even when no metal component is contained in the deposits; 3) therefore, there is a high selectivity for chlorine evolution; 4) as a result, the anode potential is low, in other words, overvoltage for the anodic reaction is low and no increase in the anode potential is caused by effects of a side reaction when electrolysis is continued; 5) therefore, the electrolytic voltage is low and the low electrolytic voltage is maintained, by which an electric energy consumption rate of a target product material at a cathode or an anode is decreased; 6) at the same time, no reduction in service life and durability of the anode is caused by the effects of a side reaction; and 7) a material which is high in durability for chlorine evolution is used. With the above-described requirements taken into account, the inventor of the present application has disclosed in Patent Literature 1 an electrode in which a catalytic layer containing amorphous iridium oxide or amorphous ruthenium oxide is formed on a conductive substrate as an anode for cobalt electrowinning using a chloride-based electrolytic solution and showed that when compared with a conventional anode, that is, a titanium electrode that is coated with a crystalline composite oxide of ruthenium and titanium, the potential of this anode is reduced and a side reaction that produces cobalt oxyhydroxide at the anode is also restrained, etc.

EP 2 690 200 A1 is prior art under Article 54(3) EPC. It is concerned with an anode for electrowinning in a sulfuric acid based electrolytic solution, wherein the anode comprises a catalytic layer of amorphous ruthenium oxide and amorphous tantalum oxide formed on conductive substrate. It does not disclose the use of the anode for chlorine evolution.

WO 2009/151044 A1 and WO 2011/070908 A1 disclose anodes for electrowinning.

### Citation List

### Patent Literature

PTL 1: Japanese Patent No. 4516618
PTL 2: Japanese Published Unexamined Patent Application No. 2008-156684
PTL 3: Japanese Published Unexamined Patent Application No. 2008-50675
PTL 4: Japanese Published Unexamined Patent Application No. 2010-65311
PTL 5: Japanese Translation of International Application (Kohyo) No. 2010-507017
PTL 6: Japanese Published Unexamined Patent Application No. 2007-100113
PTL 7: Japanese Published Unexamined Patent Application No. 2011-17084
PTL 8: U.S. Patent Application Publication No. 2009/0288958 Non Patent Literature

NPL 1: J. Ribeiro and A. R. De Andrade, Journal of The Electrochemical Society, Vol. 151, No. 10, pp. D106-D112 (2004)

### Summary of Invention

### Technical Problem

As described above, the inventor of the present application has disclosed in Patent Literature 1 an anode for cobalt electrowinning in which a catalytic layer containing amorphous iridium oxide or amorphous ruthenium oxide is formed on a conductive substrate and showed that in cobalt electrowinning by use of a chloride based electrolytic solution, use of an anode having a catalytic layer composed of an amorphous composite oxide of ruthenium and titanium is able to decrease the anode potential and an electrolytic voltage, when compared with a titanium electrode that is coated with a crystalline composite oxide of ruthenium and titanium, and also able to restrain deposition of cobalt oxyhydroxide occurring as a side reaction of the anode. However, not only in electrowinning of metal but also in brine electrolysis, hydrochloric acid electrolysis and sea water electrolysis, a further increase in catalytic activity for chlorine evolution has been required to provide a method for decreasing the anode potential and also further decreasing the electrolytic voltage in association therewith.

The present invention has been made in view of the above situations, an object of which is to provide a use of a chlorine evolution anode for chlorine evolution, which is low in the anode potential for chlorine evolution, thereby able to decrease an electrolytic voltage and lower an electric energy consumption rate, when compared with a carbon electrode, a lead electrode, a lead alloy electrode, a metal-coated titanium electrode and a metal oxide-coated titanium electrode in electrowinning, brine electrolysis, hydrochloric acid electrolysis and sea water electrolysis in which a main reaction of the anode is chlorine evolution and a use of a chlorine evolution anode for chlorine evolution in electrowinning, brine electrolysis, hydrochloric acid electrolysis, sea water electrolysis, etc.

### Solution to Problem

As a result of intensive studies for solving the aforementioned problems, the inventor of the present application has completed the present invention by finding that the aforementioned problems could be solved by the use of an anode with a catalytic layer containing amorphous ruthenium oxide and amorphous tantalum oxide formed on a conductive substrate for chlorine evolution.

That is, in order to solve the above-described problems, the chlorine evolution anode which is used for chlorine evolution according to the present invention has the following arrangements.

The chlorine evolution anode used according to the first aspect of the present invention for chlorine evolution is a chlorine evolution anode at which the main reaction is generation of chlorine from an aqueous solution, and the anode is arranged so as to form a catalytic layer containing amorphous ruthenium oxide and amorphous tantalum oxide on a conductive substrate.

This arrangement provides the following effects.
(1) The catalytic layer which contains amorphous ruthenium oxide and amorphous tantalum oxide selectively shows a high catalytic activity for chlorine evolution as a reaction of the anode in an aqueous solution of a wide range of pH, thereby considerably reducing the anode potential for chlorine evolution.
(2) The anode is higher in catalytic activity for chlorine evolution than a titanium electrode coated with an amorphous composite oxide of ruthenium and titanium or a titanium electrode coated with a crystalline composite oxide of ruthenium and titanium and able to decrease an electrolytic voltage to a greater extent than other chlorine evolution anodes, irrespective of types of electrolysis such as electrowinning, brine electrolysis, acid electrolysis and sea water electrolysis.
(3) The anode used according to the present invention gives a significantly unique effect that the anode is able to further reduce the anode potential and to lower an electrolytic voltage compared with an anode which has a catalytic layer containing amorphous ruthenium oxide or amorphous iridium oxide formed thereon, and, in particular, an anode which has a catalytic layer composed of an amorphous composite oxide of ruthenium and titanium formed thereon.
(4) The anode potential for chlorine evolution is decreased and chlorine evolution is given a higher priority over other side reactions, thereby restraining side reactions at the anode such as deposition and accumulation of cobalt oxyhydroxide, manganese oxyhydroxide and lead dioxide, etc., at the anode.
(5) Since ruthenium is one third or less the price of iridium, a catalytic activity higher than the catalytic activity for chlorine evolution on the catalytic layer containing amorphous iridium oxide and amorphous tantalum oxide may be achieved by a less expensive catalytic layer that contains amorphous ruthenium oxide and amorphous tantalum oxide.

Here, the conductive substrate may be preferably made of a valve metal such as titanium, tantalum, zirconium, niobium, tungsten, or molybdenum; an alloy predominantly composed of a valve metal such as titanium - tantalum, titanium - niobium, titanium - palladium, or titanium - tantalum - niobium; an alloy of a valve metal and a platinum group metal and/or a transition metal; or electrically conductive diamond (e.g., boron doped diamond), but the present invention is not limited thereto. Furthermore, the conductive substrate may be formed in various shapes such as plate-shaped, mesh-shaped, rod-shaped, sheet-shaped, tubular, wire-shaped, porous plate shaped, porous, a three-dimensional porous structure in which spherical metal particles are bonded. As the conductive substrate other than the aforementioned ones, it is also acceptable to employ metals other than valve metals, such as iron or nickel, or electrically conductive ceramics which are coated with the aforementioned valve metals, alloys, or electrically conductive diamond, etc.

The invention according to the second aspect is the use of the chlorine evolution anode according to the first aspect which is arranged so as to be used in any one of electrowinning, brine electrolysis, hydrochloric acid electrolysis and sea water electrolysis.

This arrangement provides the following effect in addition to those obtained in the first aspect.
(1) In electrowinning, brine electrolysis, hydrochloric acid electrolysis and sea water electrolysis in which a main reaction of the anode is chlorine evolution, the anode potential for chlorine evolution is lower and it is therefore possible to decrease an electrolytic voltage and lower an electric energy consumption rate, when compared with a carbon electrode, a lead electrode, a lead alloy electrode, a metal-coated titanium electrode and a metal oxide-coated titanium electrode.

The invention according to the third aspect is the use of the chlorine evolution anode to the first aspect or the second aspect in which the catalytic layer is arranged so as to be made of a mixture of amorphous ruthenium oxide and amorphous tantalum oxide.

This arrangement provides the following effect in addition to those obtained in the first aspect or the second aspect. (1) Since the catalytic layer is composed of a mixture of amorphous ruthenium oxide and amorphous tantalum oxide, obtained is durability which is applicable to the anode for chlorine evolution.

Here, Patent Literature 7 and Non Patent Literature 1 have disclosed that there is decreased durability of an electrode which is provided with a coating layer containing ruthenium oxide and tantalum oxide obtained by thermal decomposition at 450°C or higher. Such a result is a problem found in a case where oxygen is evolved on an electrode with a catalytic layer which contains crystalline ruthenium oxide obtained when thermal decomposition is performed at a temperature of at least 350°C or higher. With regard to this, the inventor of the present application has found that an anode with a catalytic layer in which amorphous ruthenium oxide is created in a mixture with amorphous tantalum oxide is high in durability as an anode for chlorine evolution.

Here, the present invention will be described in more detail below. The catalytic layer containing amorphous ruthenium oxide and amorphous tantalum oxide may be formed on the conductive substrate by thermal decomposition, in which a precursor solution containing ruthenium and tantalum is applied to the conductive substrate and then heated at a predetermined temperature. Other than the thermal decomposition, it is also possible to employ various types of physical vapor deposition or chemical vapor deposition methods, etc., such as sputtering and CVD. In particular, among those methods for making the anode used for chlorine evolution according to the present invention, the method for making the anode by thermal decomposition will be described. For example, a precursor solution containing ruthenium and tantalum in a variety of forms such as an inorganic compound, an organic compound, an ion, or a complex is applied to a titanium substrate, which is then thermally decomposed at temperatures in a range lower than at least 350°C, thereby forming a catalytic layer containing amorphous ruthenium oxide and amorphous tantalum oxide on the titanium substrate. For example, a butanol solution in which ruthenium chloride hydrate and tantalum chloride are dissolved is employed as a precursor solution, which is then applied to the titanium substrate and thermally decomposed. At this time, for example, if the mole ratio of ruthenium to tantalum in the butanol solution is from 10:90 to 90:10, the catalytic layer containing a mixture of amorphous ruthenium oxide and amorphous tantalum oxide is formed at a thermal decomposition temperature of 300°C. Furthermore, by thermal decomposition at 260°C after the application of the aforementioned precursor solution, the catalytic layer of a mixture of amorphous ruthenium oxide and amorphous tantalum oxide may be formed.

When the catalytic layer containing amorphous ruthenium oxide and amorphous tantalum oxide is formed on a conductive substrate by thermal decomposition, it varies whether amorphous ruthenium oxide and amorphous tantalum oxide are contained in the catalytic layer, depending on the mole ratio of ruthenium to tantalum contained in the precursor solution to be applied to the titanium substrate and the thermal decomposition temperature. Furthermore, when a metal component other than ruthenium and tantalum is contained in the precursor solution, it also varies depending on the type of the metal component and the mole ratio of the metal component to all metal components contained in the precursor solution, etc. For example, when the same components other than metal components are contained in the precursor solution and only ruthenium and tantalum are contained as metal components, a lower mole ratio of ruthenium in the precursor solution would tend to show a greater range of thermal decomposition temperatures in which the catalytic layer containing amorphous ruthenium oxide and amorphous tantalum oxide is obtained. Furthermore, the conditions for forming the catalytic layer containing amorphous ruthenium oxide and amorphous tantalum oxide also vary depending not only on the mole ratio of such metal components but also on the method for preparing and the material of the precursor solution, for example, raw materials of ruthenium and tantalum used to prepare the precursor solution, the type of a solvent, and the type and concentration of an additive that may be added to accelerate thermal decomposition.

Therefore, for the chlorine evolution anode used according to the present invention, the conditions for forming, by thermal decomposition, the catalytic layer containing amorphous ruthenium oxide and amorphous tantalum oxide are not limited to the use of the butanol solvent in the thermal decomposition, the mole ratio of ruthenium to tantalum, and the range of thermal decomposition temperatures associated therewith, as mentioned above. The aforementioned conditions are only an example, and the method for making the chlorine evolution anode used according to the present invention may include any methods other than those mentioned above so long as the methods are available for forming the catalytic layer containing amorphous ruthenium oxide and amorphous tantalum oxide on the conductive substrate. For example, as a matter of course, such methods may include one which is disclosed in Patent Literature 8 that involves a heating step in the preparation process of the precursor solution. Note that the formation of the catalytic layer containing amorphous ruthenium oxide and amorphous tantalum oxide may be known from the fact that by a typically employed X-ray diffraction method, a diffraction peak equivalent to ruthenium oxide or tantalum oxide is not observed or becomes broad.

The invention according to the fourth aspect is the use of the chlorine evolution anode according to any one of the first aspect to the third aspect in which a mole ratio of ruthenium to tantalum in the catalytic layer is arranged to be from 90:10 to 10:90.

This arrangement provides the following effect in addition to those obtained in any one of the first aspect to the third aspect.
(1) The catalytic layer may keep a high electrical conductivity. In addition, a high catalytic activity for chlorine evolution and effects of restraining a side reaction may be maintained for a prolonged period of time.

Here, where a mole ratio of ruthenium is in excess of 90 mole percent, it becomes difficult to provide effects of stabilizing ruthenium oxide in a catalytic layer due to a smaller percentage of tantalum oxide, and this is therefore not preferable. Further, where a mole ratio of ruthenium is lower than 10 mole percent, the electrical conductivity of the catalytic layer is decreased and an electrode in itself is increased in resistance. This may cause an increase in voltage and it is therefore not preferable.

The invention according to the fifth aspect is the use of the chlorine evolution anode according to any one of the first aspect to the fourth aspect, wherein an intermediate layer is formed between the catalytic layer and the conductive substrate.

This arrangement provides the following effects in addition to those obtained in any one of the first aspect to the fourth aspect.
(1) The intermediate layer is formed between the catalytic layer and the conductive substrate and at the same time, the surface of the conductive substrate is coated, thereby preventing the electrolytic solution from reaching the conductive substrate even when the electrolytic solution penetrates into the catalytic layer. Thus, the conductive substrate will never be corroded by the acidic electrolytic solution, thereby preventing an unsmooth current flow between the conductive substrate and the catalytic layer caused by corrosion product.
(2) When an intermediate layer is formed which is made of oxide or composite oxide and which is different from the catalytic layer of the chlorine evolution anode used according to the present invention, the catalytic activity for chlorine evolution of the intermediate layer is lower than the catalytic layer containing amorphous ruthenium oxide and amorphous tantalum oxide. Thus, even when the
   electrolytic solution penetrates into the catalytic layer and reaches the intermediate layer, the intermediate layer has a higher durability than the catalytic layer and thus protects the conductive substrate because chlorine evolution does not occur on the intermediate layer at a higher priority than on the catalytic layer. At the same time, the conductive substrate is coated with such an oxide or composite oxide having a higher durability, thereby further preventing the corrosion of the conductive substrate by the electrolytic solution when compared with the case of no intermediate layer provided.

Here, the intermediate layer has a lower catalytic activity for chlorine evolution than the catalytic layer but sufficiently coats the conductive substrate, thus restraining corrosion of the conductive substrate. The intermediate layer may be made of, for example, metal, alloy, a carbon based material such as boron doped diamond (electrically conductive diamond), a metal compound such as an oxide and a sulfide, and a composite compound such as a metal composite oxide. For example, the intermediate layer would be formed with a metal, in the case of which a thin film of tantalum or niobium, etc., may be preferably employed. The intermediate layer would also be formed with an alloy, in the case of which preferably employed are, for example, an alloy of tantalum, niobium, tungsten, molybdenum, titanium or platinum, etc. The intermediate layer made by using a carbon based material such as boron doped diamond (electrically conductive diamond) also has the same effects. The intermediate layer made of the above-described metal, alloy or carbon based material may be formed by thermal decomposition, various types of physical vapor deposition or chemical vapor deposition methods such as sputtering and CVD or by a variety of methods such as hot dipping and electroplating. For example, the intermediate layer made of a metal compound such as an oxide and a sulfide or a metal composite oxide may preferably include an intermediate layer made of an oxide containing crystalline ruthenium oxide, etc. In particular, where the catalytic layer is prepared by thermal decomposition, it is advantageous, from the view point of simplifying making processes of the anode, to form the intermediate layer of an oxide or a composite oxide in the same manner by thermal decomposition.

The invention according to the sixth aspect is the use of the chlorine evolution anode according to the fifth aspect, in which the intermediate layer is arranged so as to be made of tantalum, niobium, tungsten, molybdenum, titanium, platinum or any one of alloys of these metals. This arrangement provides the following effects in addition to those obtained in the fifth aspect.
(1) The above-described metals or alloys are used as the intermediate layer, by which it is possible to effectively restrain corrosion of the conductive substrate.
(2) It is effective in production of the intermediate layer because the intermediate layer may be formed by thermal decomposition, various types of physical vapor deposition or chemical vapor deposition methods such as sputtering and CVD or by a variety of methods such as hot dipping and electroplating.

The invention according to the seventh aspect is the use of the chlorine evolution anode according to the fifth aspect, in which the intermediate layer is arranged so as to contain a composite oxide of crystalline ruthenium and titanium.

This arrangement provides the following effect in addition to those obtained in the fifth aspect. (1) Since ruthenium oxide in the catalytic layer and a composite oxide in the intermediate layer belong to the same crystal group and are close in interatomic distance, the intermediate layer and the catalytic layer formed thereon have a good adhesion therebetween, thus providing a distinctively improved durability.

Here, the intermediate layer containing a crystalline composite oxide of ruthenium and titanium may be made by thermal decomposition in which a precursor solution containing ruthenium and titanium is applied to the conductive substrate and thereafter heated at a predetermined temperature. The intermediate layer may also be made by various types of physical vapor deposition or chemical vapor deposition methods, etc., such as sputtering and CVD. For example, in the case of the thermal decomposition, preferable is such an intermediate layer which is made of a crystalline composite oxide of ruthenium and titanium that is obtained by thermal decomposition of a precursor solution containing ruthenium and titanium at a temperature from 450°C to 550°C.

The invention according to the eighth aspect is the use of the chlorine evolution anode according to the fifth aspect, in which the intermediate layer is arranged so as to contain crystalline ruthenium oxide and amorphous tantalum oxide.

This arrangement provides the following effect in addition to those obtained in the fifth aspect.
(1) Since ruthenium oxide in the catalytic layer and ruthenium oxide in the intermediate layer belong to the same crystal group and are close in interatomic distance, the intermediate layer and the catalytic layer formed thereon have a good adhesion therebetween, thus providing a distinctively improved durability.

Here, the intermediate layer containing crystalline ruthenium oxide and amorphous tantalum oxide may be made by thermal decomposition in which a precursor solution containing ruthenium and tantalum is applied to the conductive substrate and thereafter heated at a predetermined temperature. The intermediate layer may also be made by various types of physical vapor deposition or chemical vapor deposition methods, etc., such as sputtering and CVD. For example, in the case of the thermal decomposition, preferable is such an intermediate layer made of crystalline ruthenium oxide and amorphous tantalum oxide that is obtained by thermal decomposition of a precursor solution containing ruthenium and tantalum at a temperature from 400°C to 550°C.

The invention according to the ninth aspect is the use of the chlorine evolution anode according to the fifth aspect, wherein the intermediate layer is electrically conductive diamond.

This arrangement provides the following effect in addition to those obtained in the fifth aspect.
(1) The intermediate layer is electrically conductive diamond and therefore quite high in corrosion resistance against an acidic aqueous solution. It is therefore possible to effectively restrain corrosion of the conductive substrate in particular. Advantageous Effects of Invention

The use according to the present invention provides the effects listed below.
1) The chlorine evolution anode of which the main reaction is to generate chlorine from an aqueous solution may lower the chlorine evolution potential when compared with that of a conventional anode. Therefore, in electrowinning, brine electrolysis, hydrochloric acid electrolysis and sea water electrolysis, etc., this anode is able to decrease an electrolytic voltage in an aqueous solution of a wide range of pH, thus making it possible to significantly lower an electric energy consumption rate.
2) Further, since the chlorine evolution potential at the anode may be decreased when compared with that of a conventional anode, it is possible to restrain various side reactions which may take place on the anode. For example, electrodeposition and accumulation of cobalt oxyhydroxide at the anode, which is a side reaction in cobalt electrowinning, may be restrained. Therefore, in long-term electrolysis, the electrolytic voltage may be prevented from being increased.
3) In addition to the above-described effects, the present invention provides the effect to eliminate or reduce the work to remove the oxide or other chemical compounds which would be otherwise deposited and accumulated by a side reaction on the anode. Thus, the damage to the anode that would be caused by such work is restrained, thereby providing a prolonged service life of the anode.
4) In addition to the above-described effects, the present invention provides the effect to eliminate or decrease the work removing the oxide or other chemical compounds which would be otherwise deposited and accumulated on the anode by a side reaction. Thus, maintenance and replacement of the anode may be decreased or reduced. Further, a necessity for suspending electrolysis is restrained because the need for removing work is eliminated or decreased, thus making it possible to realize continuous and more stable electrolysis.
5) In addition to the above-described effects, the present invention provides the effect in which the deposits will not restrict an effective surface area of the anode or an area of the anode available for electrolysis may not be non-uniform because the deposits on the anode are restrained. It is thus possible to restrain the quality deterioration of metal obtained by electrowinning, for example, due to non-uniform formation of metal on a cathode.
6) Further, it is possible to prevent metal which has grown non-uniformly on the cathode from reaching and short-circuiting the anode due to the above-described reasons, thereby resulting in a failure of electrowinning. Still further, metal is prevented from growing non-uniformly and in a dendrite form on the cathode. It is therefore possible to decrease the distance between the anode and the cathode, and restrain an increase in electrolytic voltage by ohmic loss of an electrolytic solution.
7) Further, since various problems that would be otherwise caused by the deposits on the anode resulting from a side reaction are resolved as described above, it is possible to continuously perform stable electrolysis and decrease maintenance and management work. And, it is also possible to easily perform product management of metal obtained by electrowinning. Still further, it is possible to decrease the cost of the anode in long-term electrolysis.
8) Furthermore, according to the present invention, when compared with a conventional titanium electrode with a catalytic layer containing iridium oxide formed thereon, use of ruthenium oxide reduces the cost of the catalytic layer; and a reduced thermal decomposition temperature reduces the cost of the process of forming the catalytic layer as well.

### Brief Description of Drawings

Fig. 1 shows cyclic voltammograms obtained in Example 2 and Comparative Example 4.
Fig. 2 shows cyclic voltammograms obtained in Example 3 and Comparative Example 5.

### Description of Embodiments

Hereinafter, the present invention will be described in more detail in accordance with the Examples and Comparative Examples. However, the present invention is not limited to the following Examples and also applicable to, for example, a chlorine evolution anode for electrowinning of metals other than nickel and cobalt.

### Examples

### [Electrowinning of nickel]

### (Example 1)

A commercially available titanium plate (5 cm in length, 1 cm in width, 1 mm in thickness) was immersed and etched in a 10% oxalic acid solution at 90°C for 60 minutes and then washed and dried. Next, prepared was a coating solution which was obtained by adding ruthenium trichloride trihydrate (RuCl₃·3H₂O) and tantalum pentachloride (TaCl₅) to a butanol (n-C₄H₉OH) solution containing 6 vol% concentrated hydrochloric acid so that the mole ratio of ruthenium to tantalum is 90:10 and the total of ruthenium and tantalum is 50 g/L in terms of metal. This coating solution was applied to the titanium plate dried as mentioned above, dried at 120 ° C for 10 minutes, and then thermally decomposed for 20 minutes in an electric furnace that was held at 260°C. This series of application, drying, and thermal decomposition was repeated five times in total in order to prepare a chlorine evolution anode of Example 1, the anode having a catalytic layer formed on the titanium plate that was a conductive substrate.

An X-ray diffraction analysis of the structure of the chlorine evolution anode of Example 1 showed that a diffraction peak equivalent to RuO₂ was not observed in an X-ray diffraction image and a diffraction peak equivalent to Ta₂O₅ was not observed. It is noted that some diffraction peaks of Ti were observed but these were caused by the titanium plate. That is, the chlorine evolution anode of Example 1 had a catalytic layer composed of amorphous ruthenium oxide and amorphous tantalum oxide formed on the titanium plate.

### (Comparative Example 1)

Prepared was a chlorine evolution anode of Comparative Example 1 in the same manner as that of Example 1, except that the catalytic layer was formed at a thermal decomposition temperature of 500°C in place of a temperature of 260°C. An X-ray diffraction analysis of the structure of the chlorine evolution anode of Comparative Example 1 showed that some diffraction peaks equivalent to RuO₂ were observed in an X-ray diffraction image but a diffraction peak equivalent to Ta₂O₅ was not observed. It is noted that some diffraction peaks of Ti were observed but these were caused by the titanium plate. That is, the chlorine evolution anode of Comparative Example 1 had a catalytic layer composed of crystalline ruthenium oxide and amorphous tantalum oxide formed thereon.

NiCl₂ of 0.85 mol/L was dissolved in distilled water and hydrochloric acid was then added thereto to prepare a nickel electrowinning solution adjusted to have pH of 1.0. The prepared nickel electrowinning solution was placed into a 200 mL beaker and a nickel plate (2 cm x 2 cm) was immersed thereinto as a cathode. Furthermore, the chlorine evolution anode of Example 1 or Comparative Example 1 above was mounted in a polytetrafluoroethylene holder, and then, with the electrode area in contact with the nickel electrowinning solution restricted to 1 cm², was disposed in the same nickel electrowinning solution so as to be opposed to the aforementioned cathode with a predeterminedinter-electrode distance. An electrolytic current with current density of 25 mA/cm² based on an electrode area of the chlorine evolution anode was allowed to flow between the chlorine evolution anode and the cathode, thereby measuring a voltage across terminals (electrolytic voltage) between the chlorine evolution anode and the cathode, while nickel was subj ect to electrowinning. It is noted that the nickel electrowinning solution was subject to electrowinning at 60°C, while being agitated with an agitator at 600 rpm.

The chlorine evolution anode of Example 1 or Comparative Example 1 above was used to perform electrowinning of nickel, and an electrolytic voltage in this case was shown in Table 1.

**[Table 1]**

| | Electrolytic voltage | | Difference in electrolytic voltage (Degree of improvement) |
|---|---|---|---|
| Current density | Example 1 | Comparative Example 1 | Comparative Example 1 - Example 1 |
| 25 mA/cm² | 1.60 V | 1.73 V | 0.13 V |

As shown in Table 1, in electrowinning of nickel, where there was used the chlorine evolution anode of Example 1 having a catalytic layer composed of amorphous ruthenium oxide and amorphous tantalum oxide formed thereon, an electrolytic voltage was lower by 0.13 V than a case where there was used the chlorine evolution anode of Comparative Example 1 having a catalytic layer composed of crystalline ruthenium oxide and amorphous tantalum oxide formed thereon. That is, in the chlorine evolution anode having a catalytic layer composed of ruthenium oxide and amorphous tantalum oxide formed thereon, a case where the ruthenium oxide was amorphous (Example 1) was able to decrease an electrolytic voltage more substantially than a case where the ruthenium oxide was crystalline (Comparative Example 1).

### (Comparative Example 2)

A commercially available titanium plate (5 cm in length, 1 cm in width, 1 mm in thickness) was immersed and etched in a 10% oxalic acid solution at 90°C for 60 minutes and then washed and dried. Next, prepared was a coating solution which was obtained by adding ruthenium trichloride trihydrate (RuCl₃·3H₂O) and titanium-n-butoxide (Ti(C₄H₉O)₄) to a butanol (n-C₄H₉OH) solution so that a mole ratio of ruthenium to titanium was 30:70 and a total of ruthenium and titanium was 70 g/L in terms of metal. This coating solution was applied to the titanium plate dried as mentioned above, dried at 120°C for 10 minutes, and then thermally decomposed for 20 minutes in an electric furnace that was held at 500°C. This series of application, drying and thermal decomposition was repeated five times in total in order to prepare a chlorine evolution anode in which a catalytic layer was formed on the titanium plate that was a conductive substrate.

An X-ray diffraction analysis of the structure of the chlorine evolution anode of Comparative Example 2 showed that some sharp diffraction peaks equivalent to a solid solution of RuO₂ and TiO₂ (a composite oxide of ruthenium and titanium) were observed in an X-ray diffraction image. It is noted that some diffraction peaks of Ti were observed but these were caused by the titanium plate. That is, the chlorine evolution anode of Comparative Example 2 had a catalytic layer composed of a crystalline composite oxide of ruthenium and titanium formed on the titanium plate.

### (Comparative Example 3)

Prepared was a chlorine evolution anode of Comparative Example 3 in the same manner as that of Comparative Example 2, except that the catalytic layer was formed at a thermal decomposition temperature of 260°C in place of a temperature of 500°C. An X-ray diffraction analysis of the structure of the chlorine evolution anode of Comparative Example 3 showed that a diffraction peak equivalent to a composite oxide of ruthenium and titanium was not observed in an X-ray diffraction image as observed in Comparative Example 2. It is noted that some diffraction peaks of Ti were observed but these were caused by the titanium plate. That is, the chlorine evolution anode of Comparative Example 3 had a catalytic layer composed of an amorphous composite oxide of ruthenium and titanium including amorphous ruthenium oxide formed thereon.

NiCl₂ of 0.85 mol/L was dissolved in distilled water and hydrochloric acid was then added thereto to prepare a nickel electrowinning solution adjusted to have pH of 1.0. The prepared nickel electrowinning solution was placed into a 200 mL beaker and a nickel plate (2 cm x 2 cm) was immersed thereinto as a cathode. Furthermore, the chlorine evolution anode of Example 1, Comparative Example 2 or Comparative Example 3 above was mounted in a polytetrafluoroethylene holder, and then, with the electrode area in contact with the nickel electrowinning solution restricted to 1 cm², was disposed in the same nickel electrowinning solution so as to be opposed to the aforementioned cathode with a predetermined inter-electrode distance. An electrolytic current with current density of either 50 mA/cm² or 100 mA/cm² based on an electrode area of the chlorine evolution anode was allowed to flow between the chlorine evolution anode and the cathode, thereby measuring a voltage across terminals (electrolytic voltage) between the chlorine evolution anode and the cathode, while nickel was subject to electrowinning. It is noted that the nickel electrowinning solution was subject to electrowinning at 60°C, while being agitated with an agitator at 600 rpm.

The chlorine evolution anodes of Example 1, Comparative Example 2 and Comparative Example 3 above were used to perform electrowinning of nickel, and an electrolytic voltage in this case was shown in Table 2 and Table 3.

**[Table 2]**

| | Electrolytic voltage | | Difference in electrolytic voltage (Degree of improvement) |
|---|---|---|---|
| Current density | Example 1 | Comparative Example 2 | Comparative Example 2 - Example 1 |
| 50 mA/cm² | 1.60 V | 1.79 V | 0.19 V |
| 100 mA/cm² | 1.68 V | 1.84 V | 0.16 V |

**[Table 3]**

| | Electrolytic voltage | | Difference in electrolytic voltage (Degree of improvement) |
|---|---|---|---|
| Current density | Example 1 | Comparative Example 3 | Comparative Example 3 - Example 1 |
| 50 mA/cm² | 1.60 V | 1.73 V | 0.13 V |
| 100 mA/cm² | 1.68 V | 1.77 V | 0.09 V |

As shown in Table 2, in electrowinning of nickel, where there was used the chlorine evolution anode of Example 1 having a catalytic layer composed of amorphous ruthenium oxide and amorphous tantalum oxide formed thereon, an electrolytic voltage was lower by 0.16 V to 0.19 V than a case where there was used the chlorine evolution anode of Comparative Example 2 having a catalytic layer composed of a crystalline composite oxide of ruthenium and titanium formed thereon. Further, as shown in Table 3, where the chlorine evolution anode of Example 1 was used, an electrolytic voltage was lower by 0.09 V to 0.13 V than a case where there was used the chlorine evolution anode of Comparative Example 3 having a catalytic layer composed of an amorphous composite oxide of ruthenium and titanium formed thereon. That is, the chlorine evolution anode used according to the present invention (Example 1) having a catalytic layer composed of amorphous ruthenium oxide and amorphous tantalum oxide formed thereon was decreased in electrolytic voltage to a greater extent than the chlorine evolution anode (Comparative Example 3) having a catalytic layer containing crystalline ruthenium oxide formed thereon which has already been put into practical use. The chlorine evolution anode used according to the present invention (Example 1) was also able to be further decreased in electrolytic voltage than the chlorine evolution anode (Comparative Example 2) having a catalytic layer composed of a solid solution of amorphous ruthenium oxide and amorphous titanium oxide (an amorphous composite oxide of ruthenium and titanium) formed thereon which has already been disclosed in Patent Literature 1 by the inventor of the present application.

### [Electrowinning of cobalt]

### (Example 2)

A commercially available titanium plate (5 cm in length, 1 cm in width, 1 mm in thickness) was immersed and etched in a 10% oxalic acid solution at 90°C for 60 minutes and then washed and dried. Next, prepared was a coating solution which was obtained by adding ruthenium trichloride trihydrate (RuCl₃·3H₂O) and tantalum pentachloride (TaCl₅) to a butanol (n-C₄H₉OH) solution containing 6 vol% concentrated hydrochloric acid so that a mole ratio of ruthenium to tantalum was 30:70 and a total of ruthenium and tantalum was 50 g/L in terms of metal. This coating solution was applied to the titanium plate dried as mentioned above, dried at 120°C for 10 minutes and then, thermally decomposed for 20 minutes in an electric furnace that was held at 280°C. This series of application, drying and thermal decomposition was repeated five times in total in order to prepare a chlorine evolution anode in which a catalytic layer was formed on the titanium plate that was a conductive substrate.

An X-ray diffraction analysis of the structure of the chlorine evolution anode of Example 2 showed that a diffraction peak equivalent to RuO₂ was not observed in an X-ray diffraction image and a diffraction peak equivalent to Ta₂O₅ was not observed. It is noted that some diffraction peaks of Ti were observed but these were caused by the titanium plate. That is, the chlorine evolution anode of Example 2 had a catalytic layer composed of amorphous ruthenium oxide and amorphous tantalum oxide formed on the titanium plate.

CoCl₂ of 0.90 mol/L was dissolved in distilled water and hydrochloric acid was then added thereto to prepare a cobalt electrowinning solution adjusted to have pH of 1.6. The prepared cobalt electrowinning solution was placed into a 200 mL beaker and a platinum plate (2 cm x 2 cm) was immersed thereinto as a cathode. Furthermore, the chlorine evolution anode of Example 2 above was mounted in a polytetraf luoroethylene holder, and then, with the electrode area in contact with the cobalt electrowinning solution restricted to 1 cm², was immersed in the same cobalt electrowinning solution. Further, a saturated potassium chloride solution was filled in a vessel different from that containing the cobalt electrowinning solution, and a commercially available silver - silver chloride reference electrode was immersed into the saturated potassium chloride solution. Then, the cobalt electrowinning solution was connected to the saturated potassium chloride solution by using a salt bridge and a Luggin capillary, thereby giving a three-electrode type electrochemical cell. The electrochemical cell was used to measure cyclic voltammograms under conditions of, at a liquid temperature of 60°C and at a scan rate of 25 mV/s.

### (Comparative Example 4)

The chlorine evolution anode of Comparative Example 4 was prepared in the same manner as that of Comparative Example 2 except that the catalytic layer was formed at a thermal decomposition temperature of 360°C in place of 500°C. An X-ray diffraction analysis of the structure of the chlorine evolution anode of Comparative Example 4 showed that a weak and broad diffraction line equivalent to a composite oxide of ruthenium and titanium was observed in an X-ray diffraction image. That is, an amorphous composite oxide of ruthenium and titanium was contained in the catalytic layer of the chlorine evolution anode of Comparative Example 4. Next, in place of the chlorine evolution anode of Example 2, the chlorine evolution anode of Comparative Example 4 was used to measure cyclic voltammograms under the same conditions as those of Example 2.

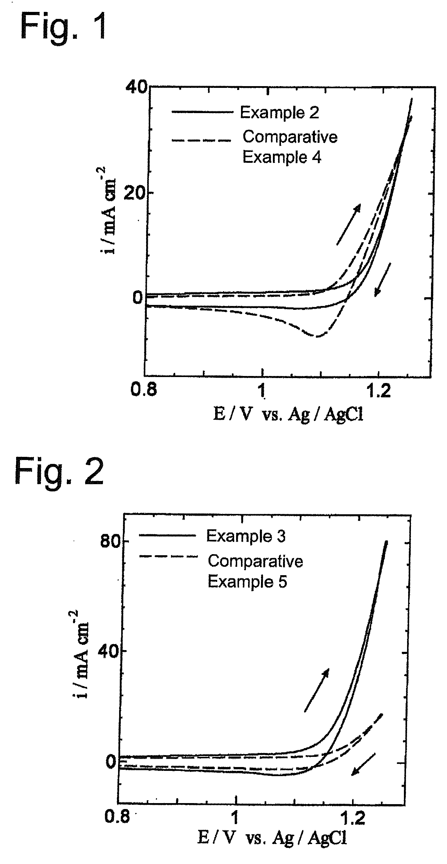

Fig. 1 shows the cyclic voltammograms obtained in Example 2 and Comparative Example 4 together. As apparent from Fig. 1, a reduction current having a peak was observed in Comparative Example 4, while the oxidation current was finally greater in Example 2 than in Comparative Example 4 but a reduction current having a peak such as that observed in Comparative Example 4 was not observed in Example 2. In Comparative Example 4, there was observed a peak of the reduction current and this was due to a reduction of cobalt oxyhydroxide adhered on the chlorine evolution anode. On the other hand, the oxidation current of Example 2 was greater than that of Comparative Example 4. This is because the oxidation of cobalt oxyhydroxide starts at the chlorine evolution anode of Example 2 later than that of the chlorine evolution anode of Comparative Example 4 and does not occur at a low potential, and the chlorine evolution anode of Example 2 was higher in catalytic activity for chlorine evolution, thereby resulting in an increase in chlorine evolution current. On the other hand, since generation of cobalt oxyhydroxide was restrained, there was observed no reduction current having a peak resulting from a reduction of cobalt oxyhydroxide, as found in Comparative Example 4. That is, it was found that the chlorine evolution anode used according to the present invention (Example 2) having a catalytic layer composed of amorphous ruthenium oxide and amorphous tantalum oxide formed thereon was able to lower a chlorine evolution potential in electrowinning of cobalt than the chlorine evolution anode (Comparative Example 4) which has already been disclosed in Patent Literature 1 by the inventor of the present application and which had a catalytic layer containing a solid solution of amorphous ruthenium oxide and amorphous titanium oxide (an amorphous composite oxide of ruthenium and titanium) formed thereon and also able to further restrain the production of cobalt oxyhydroxide on the chlorine evolution anode.

### [Hydrochloric acid electrolysis]

### (Example 3)

The chlorine evolution anode of Example 2 was used to measure cyclic voltammograms under the same conditions except that the cobalt electrowinning solution of Example 2 was changed to a hydrochloric acid electrolytic solution, the pH of which was adjusted to 1.6 by adding only hydrochloric acid to distilled water and the scan rate was changed to 50 mV/s.

### (Comparative Example 5)

The chlorine evolution anode of Comparative Example 4 was used to measure cyclic voltammograms under the same conditions except that the cobalt electrowinning solution of Comparative Example 4 was changed to a hydrochloric acid electrolytic solution, the pH of which was adjusted to 1.6 by adding only hydrochloric acid to distilled water and the scan rate was changed to 50 mV/s.

Fig. 2 shows the cyclic voltammograms obtained in Example 3 and Comparative Example 5 together. As apparent from Fig. 2, it was found that the chlorine evolution anode of Example 3 had a chlorine evolution current approximately four times greater at the same potential than the anode of Comparative Example 5, and the chlorine evolution anode of Example 3 was lower in overvoltage for chlorine evolution and also higher in catalytic activity than the anode of Comparative Example 5. That is, it was also found that the chlorine evolution anode used according to the present invention (Example 3) having a catalytic layer composed of amorphous ruthenium oxide and amorphous tantalum oxide formed thereon was able to lower a chlorine evolution potential in hydrochloric acid electrolysis than the chlorine evolution anode (Comparative Example 5) which has already been disclosed in Patent Literature 1 by the inventor of the present application and which had a catalytic layer containing a solid solution of amorphous ruthenium oxide and amorphous titanium oxide (an amorphous composite oxide of ruthenium and titanium) formed thereon.

### [Brine electrolysis and sea water electrolysis]

### (Example 4)

A commercially available titanium plate (5 cm in length, 1 cm in width, 1 mm in thickness) was immersed and etched in a 10% oxalic acid solution at 90°C for 60 minutes and then washed and dried. Next, prepared was a coating solution which was obtained by adding ruthenium trichloride trihydrate (RuCl₃·3H₂O) and tantalum pentachloride (TaCl₅) to a butanol (n-C₄H₉OH) solution containing 6 vol% concentrated hydrochloric acid so that a mole ratio of ruthenium to tantalum was 80:20 and a total of ruthenium and tantalum was 70 g/L in terms of metal. This coating solution was applied to the titanium plate dried as mentioned above, dried at 120°C for 10 minutes, and then, thermally decomposed for 20 minutes in an electric furnace that was held at 300°C. This series of application, drying and thermal decomposition was repeated five times in total in order to prepare a chlorine evolution anode in which a catalytic layer was formed on the titanium plate that was a conductive substrate.

An X-ray diffraction analysis of the structure of the chlorine evolution anode of Example 4 showed that a weak and broad diffraction line equivalent to RuO₂ was observed in an X-ray diffraction image but a diffraction peak equivalent to Ta₂O₅ was not observed. It is noted that some diffraction peaks of Ti were observed but these were caused by the titanium plate. That is, the chlorine evolution anode of Example 4 had a catalytic layer containing amorphous ruthenium oxide and amorphous tantalum oxide formed on the titanium plate.

### (Comparative Example 6)

A chlorine evolution anode of Comparative Example 6 was prepared in the same manner as the anode of Example 4 except that a catalytic layer was formed at a thermal decomposition temperature of 500°C in place of 300°C. An X-ray diffraction analysis of the structure of the chlorine evolution anode of Comparative Example 6 showed that some sharp diffraction peaks equivalent to RuO₂ were observed in an X-ray diffraction image but a diffraction peak equivalent to Ta₂O₅ was not observed. It is noted that some diffraction peaks of Ti were observed but these were caused by the titanium plate. That is, the chlorine evolution anode of Comparative Example 6 had a catalytic layer composed of crystalline ruthenium oxide and amorphous tantalum oxide formed thereon.

Sodium chloride (NaCl) of 300 g/L was dissolved in distilled water to prepare an aqueous NaCl solution (pH=4.8) in a simulated brine electrolysis and sea water electrolysis. The prepared aqueous NaCl solution was placed into a 200 mL beaker and a platinum plate (2 cm x 2 cm) was immersed thereinto as a cathode. Furthermore, the chlorine evolution anode of Example 4 or Comparative Example 6 above was mounted in a polytetrafluoroethylene holder, and then, with the electrode area in contact with the aqueous NaCl solution restricted to 1 cm², was disposed in the same aqueous NaCl solution so as to be opposed to the aforementioned cathode with a predetermined inter-electrode distance. Still further, a saturated potassium chloride solution was filled into a vessel which is different from that of the aqueous NaCl solution, a commercially available silver - silver chloride reference electrode was immersed into the saturated potassium chloride solution, and the aqueous NaCl solution was connected to the saturated potassium chloride solution by using a salt bridge and a Luggin capillary, thereby giving a three electrode-type electrochemical cell. This electrochemical cell was used to measure a potential of the chlorine evolution anode with respect to the reference electrode, while an electrolytic current with current density of either 50 mA/cm² or 100 mA/cm² based on an electrode area of the chlorine evolution anode was allowed to flow between the chlorine evolution anode and the cathode, thereby performing electrolysis. It is noted that the aqueous NaCl solution was subject to the electrolysis at 30°C, while being agitated by using an agitator at 800 rpm.

Table 4 shows a potential of the anode on electrolysis by using the chlorine evolution anode of Example 4 or Comparative Example 6 above.

**[Table 4]**

| | Anode potential | | Difference in anode potential (Degree of improvement) |
|---|---|---|---|
| Current density | Example 4 | Comparative Example 6 | Comparative Example 6 - Example 4 |
| 50 mA/cm² | 1.16 V | 1.19 V | 0.03 V |
| 100 mA/cm² | 1.19 V | 1.24 V | 0.05 V |

As shown in Table 4, it was found that the chlorine evolution anode of Example 4 having a catalytic layer containing amorphous ruthenium oxide and amorphous tantalum oxide formed thereon was lower in anode potential by 0.03 V to 0.05 V than the chlorine evolution anode of Comparative Example 6 having a catalytic layer composed of crystalline ruthenium oxide and amorphous tantalum oxide formed thereon, thus making it possible to lower an electrolytic voltage in brine electrolysis and sea water electrolysis.

### Industrial Applicability

The present invention provides the use of a chlorine evolution anode for chlorine evolution in which in electrowinning, brine electrolysis, hydrochloric acid electrolysis or sea water electrolysis which is involved in chlorine evolution as a main reaction of the anode, the anode is lower in potential at the anode for chlorine evolution than a carbon electrode, a lead electrode, a lead alloy electrode, a metal-coated titanium electrode and a metal oxide-coated titanium electrode, thereby decreasing an electrolytic voltage and lowering an electric energy consumption rate, and also provide the anode which may be used as an anode for electrowinning, brine electrolysis, hydrochloric acid electrolysis and sea water electrolysis.

## Claims

1. Use of a chlorine evolution anode for chlorine evolution, wherein the chlorine evolution anode has a catalytic layer containing amorphous ruthenium oxide and amorphous tantalum oxide formed on a conductive substrate.

2. The use of the chlorine evolution anode according to claim 1 in any one of electrowinning, brine electrolysis, acid electrolysis and sea water electrolysis.

3. The use of the chlorine evolution anode according to claim 1 or claim 2, wherein a mole ratio of ruthenium to tantalum is from 90:10 to 10:90 in the catalytic layer.

4. The use of the chlorine evolution anode according to any one of claim 1 to claim 3, wherein an intermediate layer is formed between the catalytic layer and the conductive substrate.

5. The use of the chlorine evolution anode according to claim 4, wherein the intermediate layer is made of tantalum, niobium, tungsten, molybdenum, titanium, platinum or any one of alloys of these metals.

6. The use of the chlorine evolution anode according to claim 4, wherein the intermediate layer contains a crystalline composite oxide of ruthenium and titanium.

7. The use of the chlorine evolution anode according to claim 4, wherein the intermediate layer contains crystalline ruthenium oxide and amorphous tantalum oxide.

8. The use of the chlorine evolution anode according to claim 4, wherein the intermediate layer is electrically conductive diamond.

## Patentansprüche

1. Verwendung einer Chlorentwicklungsanode zur Chlorentwicklung, wobei die Chlorentwicklungsanode eine katalytische Schicht aufweist, die amorphes Rutheniumoxid und amorphes Tantaloxid enthält, und auf einem leitenden Substrat gebildet ist.

2. Verwendung einer Chlorentwicklungsanode gemäß Anspruch 1 in einem von Electrowinning, Elektrolyse einer Natriumchloridlösung, Säureelektrolyse und Meerwasserelektrolyse.

3. Verwendung einer Chlorentwicklungsanode gemäß Anspruch 1 oder Anspruch 2, wobei das Molverhältnis von Ruthenium zu Tantal in der katalytischen Schicht 90:10 bis 10:90 beträgt.

4. Verwendung einer Chlorentwicklungsanode gemäß einem der Ansprüche 1 bis 3, wobei zwischen der katalytischen Schicht und dem leitenden Substrat eine Zwischenschicht gebildet ist.

5. Verwendung einer Chlorentwicklungsanode gemäß Anspruch 4, wobei die Zwischenschicht aus Tantal, Niob, Wolfram, Molybdän, Titan, Platin oder einer beliebigen Legierung dieser Metalle gebildet ist.

6. Verwendung einer Chlorentwicklungsanode gemäß Anspruch 4, wobei die Zwischenschicht ein kristallines Kompositoxid von Ruthenium und Titan enthält.

7. Verwendung einer Chlorentwicklungsanode gemäß Anspruch 4, wobei die Zwischenschicht kristallines Rutheniumoxid und amorphes Tantaloxid enthält.

8. Verwendung einer Chlorentwicklungsanode gemäß Anspruch 4, wobei die Zwischenschicht elektrisch leitender Diamant ist.

## Revendications

1. Utilisation d'une anode de génération de chlore pour la génération de chlore, dans laquelle l'anode de génération de chlore possède une couche catalytique contenant de l'oxyde de ruthénium amorphe et de l'oxyde de tantale amorphe formés sur un substrat conducteur.

2. Utilisation de l'anode de génération de chlore selon la revendication 1 dans l'une quelconque de l'extraction électrolytique, l'électrolyse de saumure, l'électrolyse d'acide et l'électrolyse d'eau de mer.

3. Utilisation de l'anode de génération de chlore selon la revendication 1 ou la revendication 2, dans laquelle un rapport molaire du ruthénium sur le tantale est de 90:10 à 10:90 dans la couche catalytique.

4. Utilisation de l'anode de génération de chlore selon l'une quelconque des revendications 1 à 3, dans laquelle une couche intermédiaire est formée entre la couche catalytique et le substrat conducteur.

5. Utilisation de l'anode de génération de chlore selon la revendication 4, dans laquelle la couche intermédiaire est constituée de tantale, de niobium, de tungstène, de molybdène, de titane, de platine ou de l'un quelconque des alliages de ces métaux.

6. Utilisation de l'anode de génération de chlore selon la revendication 4, dans laquelle la couche intermédiaire contient un oxyde composite cristallin de ruthénium et de titane.

7. Utilisation de l'anode de génération de chlore selon la revendication 4, dans laquelle la couche intermédiaire contient de l'oxyde de ruthénium cristallin et de l'oxyde de tantale amorphe.

8. Utilisation de l'anode de génération de chlore selon la revendication 4, dans laquelle la couche intermédiaire est du diamant électroconducteur.
